# EUROPEAN PATENT APPLICATION

(11) **EP 0 837 588 A2**
(43) Date of publication of application: **22.04.1998**
(21) Application number: 97117751.4
(22) Date of filing: 14.10.1997
(51) Int. Cl.: H04M 3/56

(54) **Teleconferencing system**

(30) Priority: 15.10.1996 US 730280
(71) Applicant: AT&T Corp., New York, NY 10013-2412 (US)
(72) Inventor: Wellner, Pierre David, Middletown, New Jersey 07748 (US)
(74) Representative: Modiano, Guido, Dr.-Ing.

(57) **Abstract**

The invention provides a teleconferencing system and method in which a user is able to pause temporarily and later rejoin the conference in real time without missing any data. The system includes an audio receiving device, an audio output device, a compression device, a storage device, and a pause feature. A controller controls data flow between the components. The system operates in a first mode in which audio is received and sent to output, a second mode in which the output is paused and received audio is sent to storage, and a third mode in which audio data is sent from storage to output until the storage device is empty.

## Description

### BACKGROUND OF THE INVENTION

### 1. Field of the Invention.

The present invention relates to audio data processing, and, in particular, to methods and apparatus for controlling the flow of audio data during teleconferencing.

### 2. Description of the Related Art.

Teleconferencing systems that enable multiple users to participate in a conference are well known in the art. Current technology allows large numbers of participants to become involved in conference calls.

When the number of people in a conference call gets large, not everyone can actively participate. Therefore, many users spend their larger portion of their time listening to others talk. Because they are not actively participating, those listening may want to accomplish other tasks that may require speaking with someone else or stepping out of the room. With currently available systems, such activity would cause the user to miss at least a portion of the conference call.

Currently available systems allow a participant to exit from the conference call entirely or to turn down the volume and miss specified portions of the call. Known systems do not allow a user to temporarily exit from, and return to, a conference call without missing any portion thereof.

### SUMMARY OF THE INVENTION

The present invention solves the foregoing problems by providing a teleconferencing system and method that allows a user to pause without missing any of the conversation.

A pause feature may be activated to allow a user to temporarily exit a teleconference. The pause feature may be released, allowing the user to rejoin the conference in real time without missing any of the conversation.

The system includes an audio receiving device that receives audio signals and an audio output device that outputs audio signals. A storage device stores the audio signals received by the audio receiving device as audio data. A controller controls information flow between the audio receiving device, the output device, and the storage device. The controller includes an audio direct device that allows the systems to operate in a first mode in which input audio signals are sent from the audio receiving device to the audio output device. Activation of the pause feature causes the system to operate in a second mode in which the operation of the audio output device is paused and all audio input is sent to the storage device. Finally, release of the pause feature allows the system to operate in a third mode in which the storage device sends stored audio data to the output device at a first rate and causes the audio input device to send data to the storage device at a second rate. The first rate is faster than the second rate so that the storage device can be emptied and the operation of the audio direct device resumed.

Through the structure described above, the user is able to temporarily exit the teleconference call. Upon returning to the call, the user can hear all conversation that has taken place since the user exited. The conversation is played at a rapid rate, thereby enabling the user to resume participation in the teleconference in real time.

### BRIEF DESCRIPTION OF THE DRAWINGS

The invention will be described in detail with reference to the following drawings in which like reference numerals refer to like elements and wherein:
Fig. 1 is a block diagram showing an overall configuration of the teleconferencing system;
Fig. 2(a) is a block diagram showing a first embodiment of a user terminal of the present invention and Fig 2(b) is a block diagram illustrating the central terminal of a first embodiment;
Fig. 3(a) is a block diagram illustrating a user terminal of a second embodiment of the invention and Fig. 3(b) is a block diagram illustrating a central terminal of the second embodiment;
Fig. 4 is a flow chart illustrating a method applicable to the first embodiment the present invention;
Fig. 5 is a flow chart illustrating a first method applicable to the apparatus of the second embodiment of the invention; and
Fig. 6 is a flow chart illustrating a second method applicable to the apparatus of the second embodiment.

### DETAILED DESCRIPTION OF PREFERRED EMBODIMENTS

Preferred embodiments of the present invention are described hereafter with reference to the drawings.

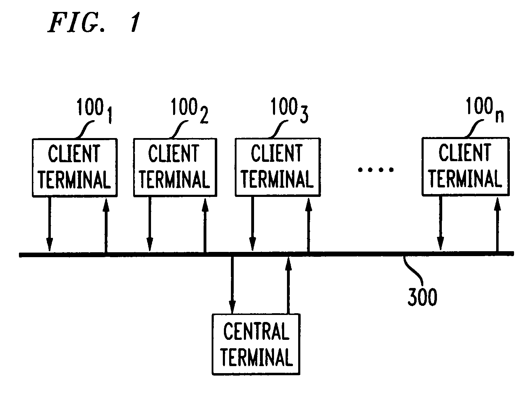

Fig. 1 is a block diagram that shows the basic structure of a telephone communication system for teleconferencing. Individual client terminals 100₁ through 100ₙ are connected with central communications terminal 600 through network 300. Audio data from each of the client communication terminals is transferred to the central communications terminal 600. After processing the received audio data, the central communications terminal 600 sends appropriate audio signals to each of the client communications terminals 600. Processing involves mixing the audio data so that each client terminal receives all audio data.

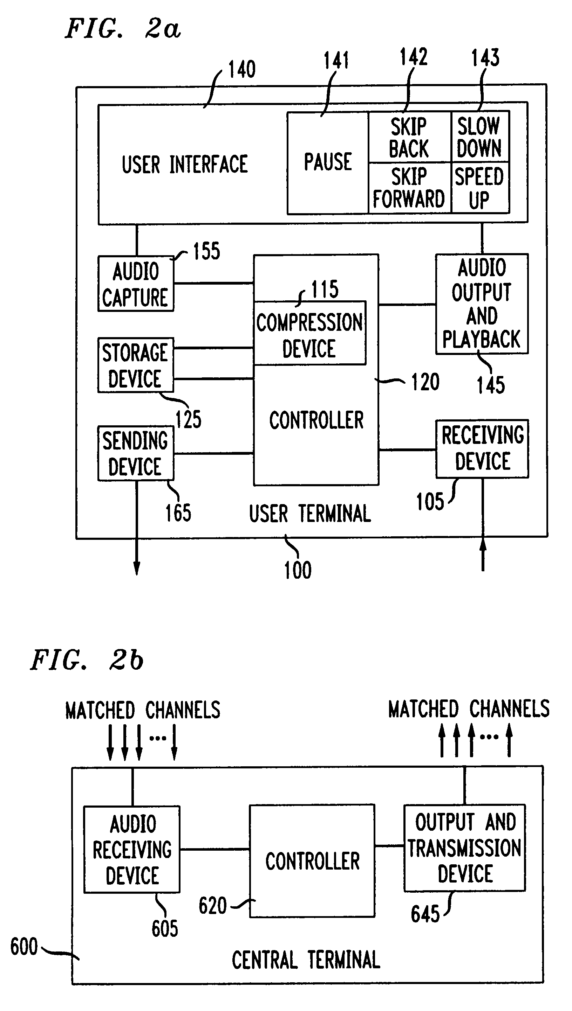

In a first embodiment of the present invention, the pause feature is entirely controlled within the user console 100, as illustrated in Fig. 2(a).

When a user desires to temporarily exit the conference, a pause feature can be activated through the use of the pause activation device 141 of user interface 140. Additional features that may be provided by the user interface 140 include skip back 142 and slow down 143.

The particular user interface may be any known user interface including, but not limited to, a touch tone interface or a PC based graphic user interface associated with a mouse, keyboard, or touch sensitive screen. The graphic user interface could graphically show additional information, such as the current position within speech segments, including the speaker, rate of speech, and the like. For example, the interface could include a Web-browser

User terminal 100 additionally includes an audio capture device 155 for capturing audio from the user and an audio output and playback device 145 for delivering audio output to the user.

The audio capture device 155 may be any conventional device for capturing sound as digital audio data. The audio playback device may also be any conventional device for performing playback of digital audio data.

An audio receiving device 105 receives audio data from a remote terminal such as central terminal 600. The sending device 165 sends audio data to the remote terminal.

In the first embodiment of the invention, user console 100 comprises compression device 115 (typically, a time-based device, as are known in the art) ) that is operable to compress audio data received by audio receiving device 105. The compressed data may be stored in storage device 125.

Compression device 115 is able to compress the speech by up to a factor of two while remaining intelligible. Time based compression algorithms that accelerate the rate of speech without changing its pitch are known in the speech recording art but have not previously been used in conjunction with live interactive speech.

Storage device 125 is preferably a first-in first-out (FIFO) buffer. The buffer has sufficient capacity to store compressed speech during the pause mode initiated by activating pause activation device 141. This type of buffer allows the first bit of data read into memory to be the first bit of data read from memory. The output data of the buffer is faster because it is compressed.

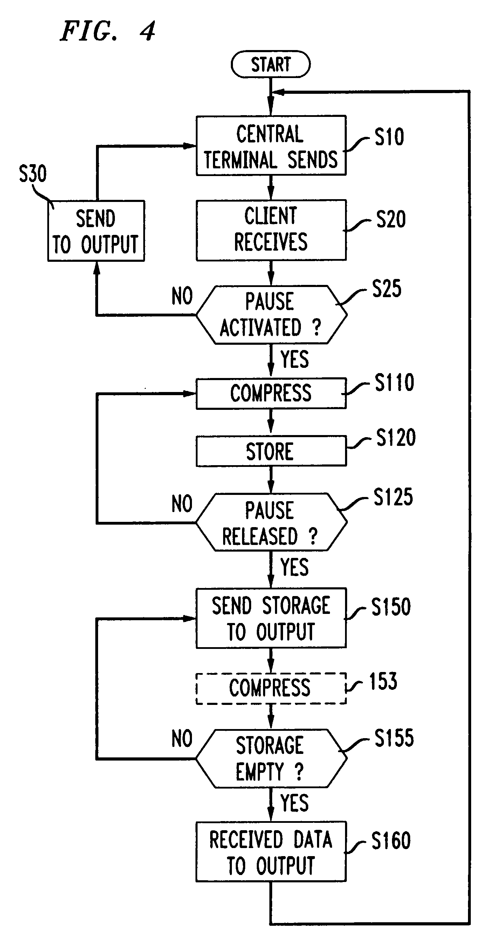

Controller 120 controls the operation of the pause feature by controlling interaction between the various components of user terminal 100. The controller 120 may be implemented as a single special purpose integrated circuit (e.g., ASIC) having a main or central processor section for overall, system level control, and separate circuits dedicated to perform various different specific computations, functions, and other processes under control of the central processor section. It will be appreciated to those skilled in the art that the controller can also be implemented using a plurality of separate dedicated programmable integrated or other electronic circuits or devices. The controller can also be implemented using a suitable programmed general purpose computer, e.g., a microprocessor, microcontroller, or other processor device (CPU or MPU) either alone or in conjunction with one or more peripheral data and signal processing devices. In general, any device or assembly of devices capable of implementing the flow chart shown in Figures 4-6 can be used.

The central terminal, as shown in Fig. 2(b) comprises a central audio receiving device 605, a controller 620 for controlling mixing of audio data, and an output device 650 for sending mixed audio data to client terminals 100.

During normal operation, audio receiving device 105 receives an audio signal a from an outside source such as a the central terminal 600. The signal is then sent directly to output and playback device 145. However, during the pause operation, the controller 120 diverts the received audio signal so that after being received by receiving device 105, the audio signal is sent to compression device 115. The compressed signal is then sent to storage device 125.

When the user again decides to participate in the conversation, the user deactivates the pause activation device 141. Thereafter, data from storage device 125 is directed to the audio output device. The data is output in its compressed form at a faster rate than it is received by receiving device 105. Output is sent to audio output and playback device 145 so that the user may hear the portions of the conference for which he was absent at an accelerated rate.

When the user participates in the conference by inputting audio data, audio capture device 155 receives the data from user and sends it as an appropriate signal through sending device 165.

Fig. 4 illustrates the complete method for implementing the first embodiment of the invention. The invention switches modes based on the activation or release of the pause activation device 141.

The method for operating the apparatus described above involves three distinct modes. All three modes for the first embodiment are illustrated in Fig. 4. The first mode or normal operating mode is the straight transmission mode. In this mode, central terminal 600 sends audio signals at S10. In S20, the client terminal receives these signals. At S25, the controller determines if the pause feature has been activated. If the feature has not been activated, the process moves to S30. At S30, the audio signals are transmitted directly to output device and playback device 145.

The second operating mode occurs upon pause activation. During the second mode it is assumed that the client continues to receive audio data. In this mode, in S10, the central terminal 600 sends audio data. In S20, the client terminal 100 receives audio data. Because the pause feature has been activated as determined at S25, controller 120 in client terminal 100 directs the input audio data to compressor 115 in step S110. In S120, the compressed audio data is stored in storage device 125. This mode continues until the pause indicator is released as determined at S125.

The third mode begins when the pause indicator is released at S125. During the third mode it is assumed that the client continues to receive audio data. In the first embodiment, client terminal 100 continues to receive audio data, compress audio data at S130 and store the data at S150 in storage device 125. Simultaneously, at S150, data from the storage device is sent to output and playback device 145. At S153, it may be desirable to direct the audio into the compressor 115 rather than perform such compression during S110. At S155, the determination is made whether the storage device is empty. If the storage device is empty, the first mode of operation resumes and received data is sent to output at S160. In other words, the client terminal 100 receives audio data and sends it directly to output device 135 as shown in steps S20 and S30.

However, if the storage device 125 is not empty, the client terminal 100 continues to receive and compress data and performs steps S130 through S150.

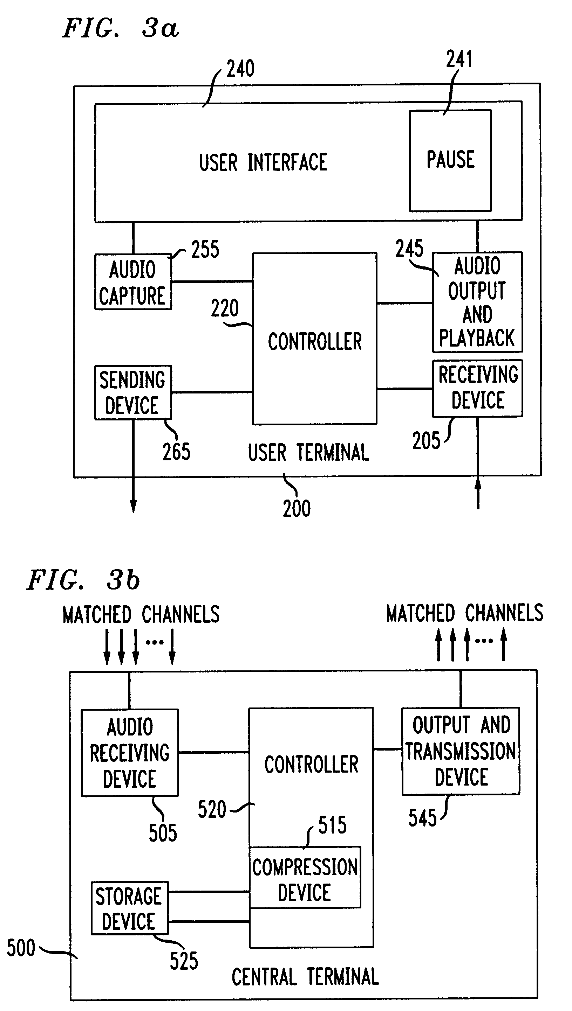

In a second embodiment of the present invention, as shown in Fig. 3, the teleconferencing system may be controlled at a more central location. This can be accomplished by providing the controller, storage, and compression devices at the teleconferencing bridge. Optionally, the pause feature may be provided as a separate service on a local area network (LAN).

Fig. 3(a) illustrates the user terminal of the second embodiment and Fig. 3(b) illustrates the structure of central terminal 500 of the second embodiment.

User terminal 200 includes a user interface 240 that is similar to that of the first embodiment. When a user desires to temporarily exit the conference, a pause activation device 241 on user interface 240 can be activated. Additional features that may be provided at user interface 240 include skip back 242 and slow down 243.

Audio capture device 255 captures audio from the user and an audio output and playback device 245 delivers audio output to the user. An audio receiving device 205 receives audio data from a remote terminal. The sending device 265 sends audio data to the remote terminal. A controller 220 may control the interaction between the various components.

The second embodiment differs from the first embodiment in that it is not necessary for the user terminal to have compression or storage devices. These features are incorporated in the central terminal. The aforementioned components of the second embodiment may be substantially similar to those described above in relation to the first embodiment.

Central terminal 500 includes a central audio receiving device 505 for receiving audio data from each of the client terminals 200. A controller, 520 selectively mixes the audio data and a central terminal output device and transmitter S545 transmits the mixed audio data back to the client terminals.

In this embodiment, central terminal 500 includes storage device 525 and compression device 515. The structure of these devices is substantially similar to that described above in relation to the first embodiment.

The controller 520 may comprise any of the devices referenced above with respect to the first described embodiment. Likewise, the receiver and transmitter devices may be any of those known in the art.

In a first method for implementing the second embodiment, for each participant 200₁ the controller 520 of central terminal 500 causes mixing of audio data from all of the client terminals except for the audio data from client terminal 200₁. Central terminal 500 then returns the resulting mixed audio data to client computer 200₁ for playback. Thus, the client computer 200₁ received mixed audio data corresponding to audio data from all teleconference participants except for its own audio data.

Central terminal 500 receives not only audio data, but also specific instruction signals from the client terminals. When the central terminal receives the instruction to pause from the client terminal, the central terminal compresses the mixed audio data for the particular client terminal with compression device 515 and transfers it to storage device 525 (these two steps may be performed in any order). The data is continually directed through compression device 515 to storage device 525 until the pause release instruction is received by central terminal 500.

When the pause release instruction is received, the data in storage device 525 is directed by the controller 520 directly to transmitting device 545. Mixed data continues to be input through the compression device 515 and storage device 525 until the storage device is emptied.

As explained above, the storage device is preferably an FIFO buffer. The data is retrieved from the device more quickly than it is received by the device. Therefore, at the direction of the controller 520, the storage device 525 eventually empties.

When the storage device 525 is emptied, the controller 520 again directs the mixed audio data directly to the transmission device 545 for return to the selected client terminal.

In this embodiment, the client terminals need not have data storage capabilities such as those described above. However, the client terminals must have the appropriate user interface 240 to create instructions for sending to central terminal 500. The necessary features of the client terminal include user interface 240, audio capture device 255, audio output and playback device 245, controller 220, sending device 265, and receiving device 205. These components are substantially similar to those described above and referenced to the first embodiment.

The user operates the device of the second embodiment in exactly the same manner as in the first embodiment. However, the user's instructions are sent to the central terminal, rather than being processed within the user's own terminal.

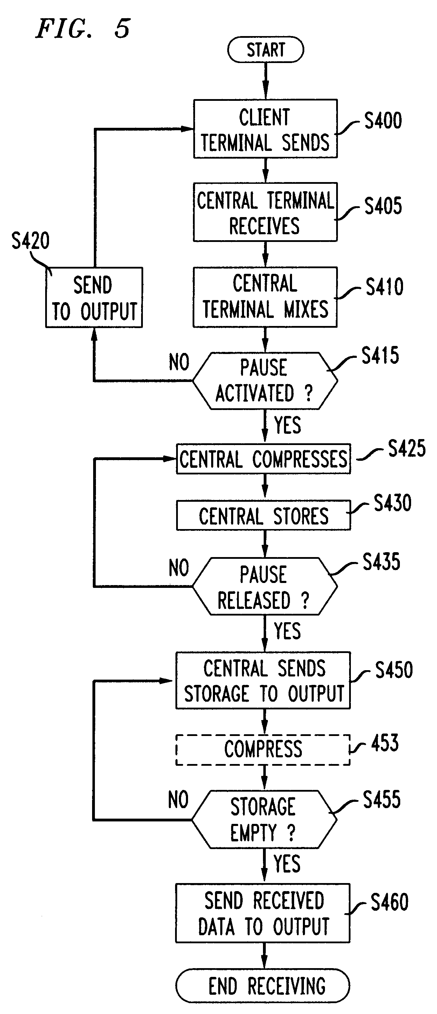

In a first method for implementing the apparatus of the second embodiment, the first mode is similar to the first mode of the first embodiment of the invention. Referring to FIG. 5, the client terminal sends audio signals at S400. In the first mode, at S405, the central terminal 500 receives audio data from each client terminal. The controller 520 causes the audio data to be mixed at S410. The data is mixed so that each user receives data from all other users but does not receive data sent from that user's own terminal. At S415, the process determines whether pause has been activated. Subsequently, if pause has not been activated, the mixed data is output to the user at S420.

The second mode according to this method begins when the pause feature is activated as determined at S415, and after the data from the client terminals is mixed at central terminal 500 in S410. Thereafter central terminal 500 compresses the data at S425 and stores the data in storage device 525 at S430. These steps continue until it has been determined that pause has been released at S435. Accordingly, no data is sent to the client terminals 100.

Upon release of the pause feature, as determined at S435, the central terminal 500 continues to compress at S440 and store the mixed audio data at S445. At S450, the central terminal sends stored data to the client through output device 545. At S453, it may be desirable to direct the audio into the compressor 115 rather than perform such compression during S425. At S455, the controller determines if the storage device 525 is empty.

If the storage device 525 is empty, the first mode is resumed and the central terminal 500 sends mixed data directly to the client terminals 200. Audio output data is then played back at S450 its original speed as soon as it is received and mixed.

However, if the storage device 525 is not empty, the central terminal continues to compress and store data and repeats steps S410 through S425 until the storage device is empty.

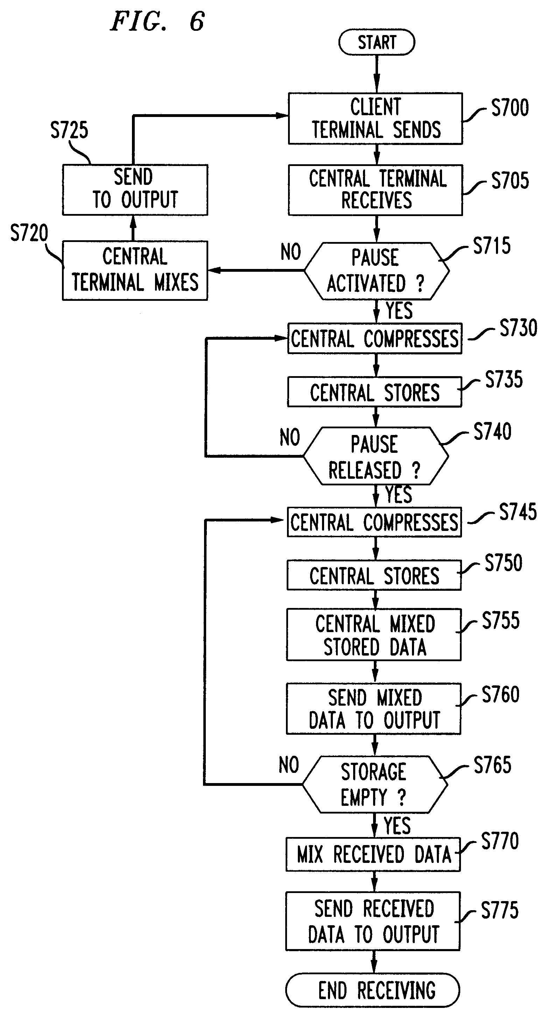

An alternative method may be employed with the structure of the second embodiment. This method is illustrated in Fig. 6. In the alternative method, the second and third operating modes differ from those of the first method. Audio data sent at S700 is received at S705 from each client terminal. If at S715, the pause feature has not been activated, the data is mixed at S720 and output at S725.

If at S715, the pause feature has been activated, the data is compressed at S730 and stored in S735. The data is stored at S735 prior to mixing. Through the use of this method, storage space is saved if multiple users activate the pause feature. Rather than saving mixed audio packets for each user, the incoming data from each client terminal is saved only once.

The second mode of pause activation continues until it is determined at S740 that pause has been released. The incoming signals are then compressed at S745 and stored at S750. Simultaneously, the stored data is mixed at S755 and output upon at S760. This process continues until it is determined that the storage device is empty at S765. When the storage device is empty, the first operating mode is resumed.

Additional options that may be available in all embodiments of the invention include skip back and slow down modes that may be selected by the user via the user interface. These modes can be implemented with the apparatus described above with the addition of skip back and slow down controls on the user interface. The skip back control would allow the user to listen to data already played back. The slow down mode would enable slow transmission to the ideal play back device. Both of these modes could be used whether during the live conference or when listening to prerecorded speech. The concept of implementing the storage and retrieval system at a central terminal may be incorporated in two ways. The central terminal may be a local area network (LAN) terminal in which the teleconferencing time machine feature would be available to the user by subscription. In this embodiment, the user would select the service via the user interface to forward and would be provided with this service only if the user had previously subscribed.

Alternatively, the central terminal may located at a teleconferencing bridge. To set up the conference, the user of each station dials a unique telephone number of the conferencing bridge. The conferencing bridge is responsive to each incoming call to add that call to the conference.

The present invention is not limited to the embodiments described above. Various modifications and alterations are possible. Various devices within the system can be combined or modified, so long as the combination of components forms the desired result.

It is evident that many alternatives, modifications and variations for the specific embodiments will be apparent to those skilled in the art. Accordingly, the preferred embodiments of the invention as set forth herein are intended to be illustrative not limiting. Various changes may be made without departing from the scope of the invention as defined in the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system that allows a user to pause and resume a live speech signal, the system comprising:
an audio receiving device that receives audio signals;
an audio output device that outputs audio signals;
a compression device that compresses received audio signals;
a storage device that stores audio signals;
a pause activation device that causes the audio output device to stop sending at least a portion of received audio signals to the audio output device and causes the audio signals to be stored by the storage device; and
a pause release device that causes the storage device to send compressed audio signals to the audio output device at a first rate faster than a second rate at which the storage device receives audio signals, wherein the audio output device fully resumes operation when the storage device is empty so that the user is able to resume real time participation without missing data.

2. The teleconferencing system of claim 1, wherein a user terminal houses the audio receiving device, the audio output device, the compression device, and the storage device, and the user terminal further comprises a controller that controls information flow between the audio receiving device, the audio output device, and the storage device.

3. The teleconferencing system of claims 1 or 2, further comprising a speed adjustment mechanism that allows adjustment of the first rate; and/or
wherein the first rate can be adjusted to twice the second rate; and/or
wherein the storage device comprises a First In First Out buffer; and/or
wherein the teleconferencing system further comprises a graphic user interface for allowing activation and release of the pause activation device.

4. The teleconferencing system of claim 1, wherein a central terminal at a teleconferencing bridge houses the audio receiving device, the audio output device, and the storage device, and further comprises a controller that controls information flow between the audio receiving device, the audio output device, and the storage device.

5. The teleconferencing system of claim 4, wherein the central terminal receives audio data from at least two user terminals and the central terminal further comprises a device that mixes the audio data from the user terminals.

6. A multiple mode teleconferencing system comprising:
audio receiving means for receiving input audio signals;
audio output means for outputting audio signals;
means for mixing multiple audio signals;
storage means for storing audio signals as audio data;
means for operating in a first mode, the first mode comprising receiving audio signals and sending the audio signals to the audio output device;
means for operating in a second mode, the second mode comprising pausing the sending of audio signals to the audio output device and storing the audio signals received by said audio receiving device as audio data; and
means for operating in a third mode, the third mode comprising sending stored audio data to the audio output device at a first rate and sending audio signals to the storage device at a second rate, wherein the first rate is faster than the second rate so that the storage device can be emptied and operation of the first mode resumed.

7. The teleconferencing system of claim 6, further comprising a speed adjustment means for adjusting the first rate; and/or
wherein the storage device comprises a First In First Out buffer; and/or
wherein the teleconferencing system further comprises a graphic user interface; and/or
wherein a central terminal at a teleconferencing bridge houses the audio receiving device, the audio output device, and the storage device, and further comprises a controller that controls information flow between the audio receiving device, the audio output device, and the storage device.

8. The teleconferencing system of claim 7, wherein the speed adjustment means can adjust the first rate to a maximum of approximately twice the second rate; and/or
wherein the central terminal receives audio data from at least two user terminals and the central terminal further comprises a device that mixes the audio data from the user terminals.

9. The teleconferencing system of claim 6, wherein a user terminal houses the audio receiving device, the audio output device, and the storage device, and the user terminal further comprises a controller that controls information flow between the audio receiving device, the audio output device, and the storage device.

10. A teleconferencing method for using a teleconferencing system, the method comprising:
operating in a first mode, the first mode comprising receiving audio signals with an audio receiving device and directing audio signals to an audio output device;
operating in a second mode comprising pausing the sending of signals directly to the audio output device and storing audio signals received by said audio receiving device as audio data in a storage device; and
operating in a third mode comprising sending stored audio data to the audio output device at a first rate and sending data to the storage device at a second rate, wherein the first rate is faster that the second rate so that the storage device can be emptied and operation of the first mode resumed.

11. The teleconferencing method of claim 10, further comprising the step of adjusting the first rate with a speed adjustment mechanism; and/or
comprising adjusting the first rate to twice the second rate; and/or
further comprising the step of providing a First In First Out buffer as the storage device; and/or
further comprising providing a graphic user interface; and/or
further comprising the step of providing a central terminal at a teleconferencing bridge for housing the audio receiving device, the audio output device, and the storage device, and further providing a controller that controls information flow between the audio receiving device, the audio output device, and the storage device.

12. The teleconferencing method of claim 11, wherein the central terminal receives audio data from at least two user terminals and the central terminal further comprises a device that mixes the audio data from the user terminals.

13. The teleconferencing method of claim 10, comprising providing a user terminal for housing the audio receiving device, the audio output device, and the storage device, and the user terminal further comprises a controller that controls information flow between the audio receiving device, the audio output device, and the storage device.
